# EUROPEAN PATENT APPLICATION

(11) **EP 3 629 071 A1**
(43) Date of publication of application: **01.04.2020**
(21) Application number: 18196733.2
(22) Date of filing: 26.09.2018
(51) Int. Cl.: G02B 21/36, G02B 21/22

(54) **MICROSCOPY SYSTEM**

(71) Applicant: Anton Paar TriTec SA, 2034 Peseux (CH)
(72) Inventor: BELLATON, Bertrand, 2000 Neuchâtel (CH); CONTE, Marcello, 2000 Neuchâtel (CH)
(74) Representative: e-Patent SA

(57) **Abstract**

Microscopy system (1) comprising:
- a sample holder (5) adapted to support a sample (7) on a surface thereof, said surface defining a plane;
- a first optical microscope (9) facing said sample holder (7) and comprising a first lens system (9a) having a first optical magnification, and a first digital imaging device (9c) arranged to record images through said first lens system (9a), said images being of a predetermined first zone (13) of a sample (7) positioned on said sample holder (5);
- a second optical microscope (11) facing said sample holder (5) and comprising a second lens system (11a) having a second optical magnification at least five times greater than said first optical magnification, and a second digital imaging device (11c) arranged to record images through said second lens system (11a), said images being of a second zone (14) which is a subset of said first zone (13) containing the midpoint of said first zone;
- a display (17) arranged to display said images to a user; and
- an image processor (15) adapted to carry out a digital zoom, said image processor (15) being arranged to receive a first image (21, 25) from said first digital imaging device (9c) and a second image (27) from said second digital imaging device (11c) and to synchronise said images (21, 25, 27) spatially such that said second image (27) is spatially-aligned with said first image (21, 25), said first image (21), said second image (27), or a combination of said images (21, 25, 27) being displayed in function of a desired digital zoom level wherein at least one of said optical microscopes (9, 11) has an optical axis arranged at an angle to the normal to said plane.

## Description

### Technical Field

The present invention relates to the technical field of microscopy. More particularly, it relates to a microscopy system utilising digital image capture.

### State of the art

Typically, microscope systems are either of fixed optical magnification, or have multiple lens systems mounted on a turret, which can be selected by the operator by rotating the turret manually or via a motor drive so as to bring one of said lens systems into an operative position. This applies equally for "analogue" microscopes through which an operator looks, or those associated with a digital camera which captures images taken through the microscope such that they can be displayed on e.g. a television screen, computer monitor or similar.

One advantage of microscopes with digital image capture is that, even if the optical magnification of the microscope is fixed, a digital zoom can be performed on the captured images so as to magnify the images digitally, by displaying only a subset of their pixels at larger scale and lower resolution. However, such digital magnification results in decreasing resolution as the digital magnification increases, since each pixel captured subtends a fixed angle on the sample being imaged, and hence less pixels make up the displayed image as the digital zoom increases.

Combining such a system with a rotating turret is one solution to this issue, since e.g. a low optical magnification lens system can be used to identify a feature of interest, and then the turret can be turned to select a higher magnification. The area represented by one pixel of the image at low resolution is then represented by a larger number of pixels (scaling as the square of the difference in magnification) when imaged through a higher optical magnification lens system.

However, this requires manipulation of the turret. Manual operation is not always convenient, since the operator may knock the sample and displace it while manipulating the turret, or the turret may be located in a difficult-to-access space. Motorised turrets are a solution to this problem, however they add complexity and cost, and are bulky.

Furthermore, there is a risk of a higher-optical-magnification lens system colliding with the sample if the operator is not careful, since these lens systems are typically longer. Also, the alignment of the lens systems is critical so that, upon increasing magnification, the centre of each image is coincident.

Variable optical zoom microscopes are also possible, but this results in greater complexity and lower image quality compared to fixed magnification lens systems.

An aim of the present invention is hence to at least partially overcome the above-mentioned drawbacks of the prior art.

### Disclosure of the invention

More specifically, the invention relates to a microscopy system as defined by claim 1. This system comprises:
- a sample holder for supporting a sample, ideally movable in translation along two or three perpendicular axes by means of suitable manual or motorised actuators, said sample holder having a surface upon which the sample is intended to be supported. This surface defines a plane, typically parallel to the horizontal (i.e. xy) plane;
- a first optical microscope facing said sample holder and comprising a first lens system having a first optical magnification, and a first digital imaging device arranged to record images through said first lens system, said images being of a first zone of a sample positioned on said surface of said sample holder;
- a second optical microscope facing said sample holder and comprising a second lens system having a second optical magnification at least five times greater than said first optical magnification, and a second digital imaging device arranged to record images through said second lens system, said images being of a subset of said first zone comprising the midpoint of said first zone, i.e. substantially centred on said first zone so as to benefit from the optical clarity of the central regions of the lens systems;
- a display arranged to display said images to a user; and
- an image processor, for instance provided in a general-purpose computer, adapted to carry out a digital zoom, said image processor being arranged to receive said images from each of said first and second digital imaging devices and to synchronise said images spatially such that said second image is correctly spatially-aligned with said first image, that is to say that the spatial relationship of the zones imaged by each microscope is correctly registered so that the two images can be aligned digitally.

Said first image, said second image, or a combination of said images is then displayed in function of a desired digital zoom level. Either or both of said images may be corrected for distortion, colour, noise reduction or similar if necessary. Furthermore, at least one of the optical microscopes has an optical axis arranged at a non-zero angle to the normal to the plane of the sample holder's surface, which enables the centre of each zone to be in a similar location on the sample, if not substantially in the same location. The other microscope may equally be arranged with its optical axis at a non-zero angle to said normal, or may be arranged parallel to said normal.

This enables using the images of the first zone for wider-angled views which help the user to align the sample with the microscopes, and using higher-resolution, optically-zoomed-in images of the second zone to view fine detail, without requiring turrets, variable optical magnification, or other complicated optical arrangements. Indeed, it is possible to carry this out without any moving parts at all in the microscopes. This arrangement furthermore completely eliminates any need to translate the sample between individual microscopes to zoom in on a feature of reference since the two images are sufficiently closely centred one with respect to the other, and utilises the optical centre of each lens system which gives the highest image quality.

Advantageously, said second lens system has an optical axis substantially orthogonal to the plane of the surface of said sample holder, i.e. parallel to the normal of said plane. This arrangement limits optical distortion and means that the high-resolution highly-optically-magnified images from the second microscope do not require a trapezoidal correction, ensuring that the images are clear at the highest optical magnification.

Advantageously, said first lens system has an optical axis arranged at a non-zero angle (e.g. 5° to 75°) with respect to the normal to the surface of said sample holder, this angle preferably being an acute angle (e.g. 5° to 45°, further preferably 5° to 35°).

Advantageously, said first digital imaging device is arranged such that the it lies in a plane parallel to the image plane of the surface of the sample holder after being projected through the first lens system. As a result, the sample holder and any sample situated thereupon can be brought into focus across the whole of the first zone. This can notably be achieved by arranging the plane of the digital imaging device in the first microscope according to the well-known Scheimpflug principle, described in GB190401196. This ensures that the entire first image is in focus. However, use of the Scheimpflug principle is not essential, even if it is highly desirable. In the case in which the second optical microscope has an optical axis making a non-zero angle to the normal to the sample holder surface, the same principle can be applied thereto.

Advantageously, said image processor is arranged such that, below a predetermined digital zoom level (i.e. when zoomed out below a threshold zoom level), at least a part of said first image is displayed on the display and said second image is not displayed; and above a predetermined digital zoom level (i.e. when zoomed in beyond the threshold), at least a part of said second image is displayed on the display, and said first image is not displayed.

As a result, the system transitions from displaying the first image to displaying the second image at a predetermined digital zoom threshold so as to display a high-resolution image acquired at higher optical magnification, and hence to display a high-quality high-magnification image.

Alternatively, the image processor can be arranged so as to generate a composite image comprising said second image superimposed on said first image. This composite image can hence be digitally zoomed over the full range of zoom without transitioning between the two images at said digital zoom threshold.

Advantageously, said image processor is arranged so as to carry out a geometric correction, e.g. a trapezoidal correction, a rotation or similar, on each of said images obtained from a microscope having an optical axis which is not orthogonal to the plane of said sample holder, and thereby to remove image distortion occurring due to the angle that this or these microscopes make with the normal to the plane of the sample holder.

The system according to the invention as disclosed above can be incorporated into a materials testing device, such as an indenter, scratch tester, tribological tester or any other convenient tester, so as to enable easy imaging of sample surfaces before and after tests.

Advantageously, the materials testing device further comprises a materials testing tip such as an indenter, said first lens system and said second lens system have a substantially common focal plane, and said tip is configured such that its distal tip can be situated at said common focal plane. In other words, the indenter tip may always be situated at said common focal plane, or may be positioned at this plane if desired. This enables the images obtained to guide the positioning of the indenter, and to observe the resulting indentation with minimal translation of the sample.

Alternatively, said common focal plane can be situated beyond the distal tip of said indenter. This is particularly useful in the case of a fixed indenter, the indentation site being brought into focus simply by moving the sample holder in the z direction away from the indenter tip. In either case, if both microscopes are at an angle to the normal to the sample holder plane, the tip can be positioned between them, or adjacent to them both with a substantially similar angle being made between each optical axis and the axis of the tip.

The invention also relates to a method of operating a microscopy system as defined above, comprising the steps of:
- imaging a sample provided on said sample holder by means of said first optical microscope and said second optical microscope;
- providing a first image obtained from said first optical microscope and a second image obtained from said second optical microscope to said image processor;
- synchronising said first and second images spatially such that said second image is correctly spatially-aligned with said first image;
- displaying on said display said first image, said second image, or a combination of said images in function of a desired digital zoom level.

As discussed above, this enables using the images of the first zone for wider-angled views which help the user to align the sample with the microscopes, and using higher-resolution, optically-zoomed-in images of the second zone to view fine detail, without requiring turrets, variable optical magnification, or other complicated optical arrangements. Indeed, it is possible to carry this out without any moving parts in the microscopes. Again, since the two zones are substantially centred one with respect to the other, the clearest part of the lens systems is used.

Advantageously, below a predetermined digital zoom level (i.e. when zoomed out below a threshold zoom level), at least a part of said first image is displayed on the display and said second image is not displayed; and above a predetermined digital zoom level (i.e. when zoomed in beyond the threshold), at least a part of said second image is displayed on the display, and said first image is not displayed.

As a result, the system transitions from displaying the first image to displaying the second image at a predetermined digital zoom threshold so as to display a high-resolution image acquired at higher optical magnification, and hence to display a high quality high magnification image.

Alternatively, a composite image is generated, said composite image comprising said second image superimposed on said first image and aligned correctly therewith. This composite image can hence be digitally zoomed over the full range of zoom without transitioning between the two images at said digital zoom threshold.

Advantageously, in the case in which the sample holder is displaceable under motorised actuator control (e.g. at least parallel to the plane of the sample holder), the method can comprise the steps of:
- user-selection of a feature of interest (e.g. an indentation, or part of a scratch) on said display by means of an input device, e.g. by clicking on said feature of interest; and
- automatically commanding said actuators to position said sample holder such that said feature of interest is substantially centred on said display, i.e. substantially centred in whichever image is being shown at the centre of the display.

### Brief description of the drawings

Further details of the invention will appear more clearly upon reading the description below, in connection with the following figures which illustrate:
- Figure 1: a schematic representation of a microscopy system according to the invention;
- Figure 2: a schematic representation of the optical principle of the invention;
- Figures 3a and 3b: a schematic representation of the method of image processing used in the invention;
- Figure 4: a schematic representation of an alternate method of image processing according to the invention;
- Figure 5: a schematic representation of a materials testing device incorporating the system of the invention;
- Figure 6: a partial schematic representation of a materials testing device incorporating the system of the invention in a different configuration; and
- Figures 7a-c: schematic representations of a particular configuration of a materials testing device incorporating the system of the invention as projections in the xy, yz and xz planes respectively.

### Embodiments of the invention

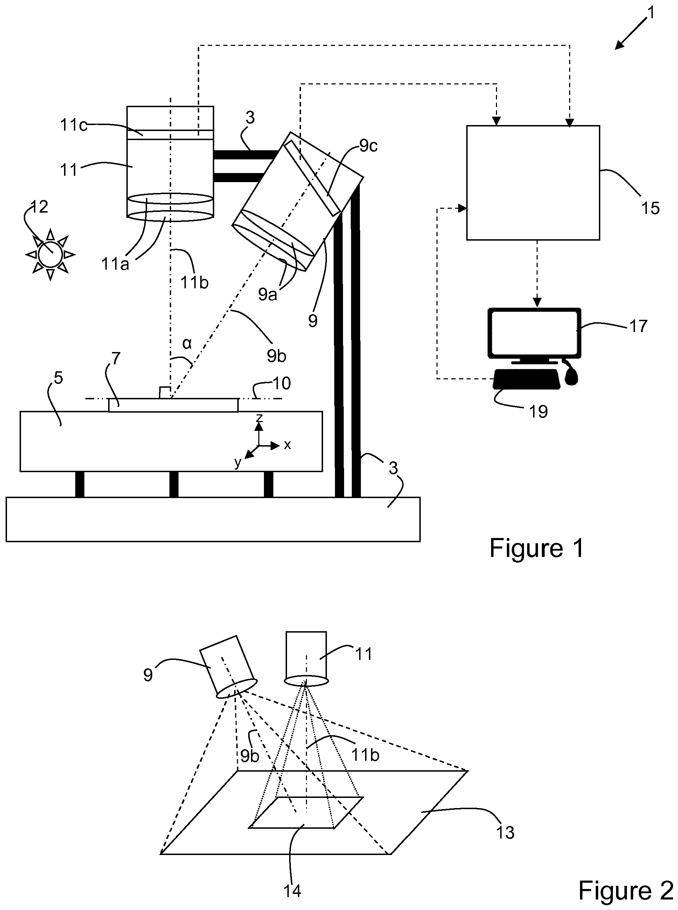

Figure 1 illustrates a microscopy system 1 according to the invention. The system 1 comprises a support 3 serving to support a sample holder 5 adapted to hold a sample 7 on a surface thereof such that it can be viewed by a first optical microscope 9 and a second optical microscope 11, these two microscopes 9, 11 being fixed to said support 3 and pointed towards said sample holder 5. The surface of the sample holder 5 adapted to hold a sample 7 defines a plane, typically parallel to the horizontal (xy) plane).

The sample holder 5 is ideally capable of moving in 3 translational axes x, y and z, where x and y are in the plane of the sample holder 5 and z is the vertical direction. It is also possible for the sample holder 5 to move in the xy plane, and the optical microscopes 9, 11 to move in the z direction. Furthermore, the sample holder may also be configured to rotate about one or more of these axes. Suitable hand-operated or motorised actuators can be provided to enable the desired degrees of freedom of the sample holder 5. However, it is also possible that the sample holder 5 may be fixed and the sample moved by hand relative to it, and/or the microscopes 9, 11 may be moved relative to the sample holder 5. In the case of motorised actuators, these can be commanded by e.g. a computer acting as input device 19 (see below).

A light source 12 such as a lamp may be provided if required.

First optical microscope 9 has a relatively low optical magnification, such as 50 or 100 times, and is arranged to image a first zone 13 (see figure 2) of the sample holder 5 and of any sample 7 situated thereupon. First zone 13 may for instance have a length and/or width of between 5mm and 35mm. To this end, first microscope 9 comprises a first lens system 9a comprising a plurality of lenses and having a first optical axis 9b directed towards the sample holder 5. The first lens system 9a may have a fixed focus, or may be focussed manually or automatically by means of an actuator-driven focussing arrangement. If the focus is fixed, the sample 7 is brought into focus by displacing the sample holder 5 in the z-direction. First optical microscope may also contain mirrors and/or prisms.

The optical axis 9b of first microscope 9 is inclined at a non-zero angle α to the normal of the plane of the surface of the sample holder 5, this angle preferably being in the range of 5° to 75°. Preferably, this angle is acute, and lies between 5° and 35°. Furthermore, a first digital imaging device 9c is situated inside the first microscope so as to record images formed by the first lens system. This digital imaging device may comprise a charge coupled device (CCD) or any other type of imaging sensor, and may be arranged to record images in 2D, or even in 3D in the case in which the digital imaging device is a light field camera.

Since the optical axis 9b of the first optical microscope 9 is inclined with respect to the normal to the surface of the sample holder in the configuration illustrated, the plane of focus of the image obtained is not orthogonal to the first optical axis 9b. In order to present a correctly-focused image to the digital imaging device 9c, this latter is inclined to the optical axis 9b of the first microscope such that the image is correctly focused according to the so-called Scheimpflug principle. This principle is well-known in the field of optics and hence need not be described in detail here, other than to say that the plane of the digital image device is arranged parallel to the plane of focus of the surface of the sample holder 5, as projected by the first optical microscope 9.

The second optical microscope 11 is arranged so as to image a second zone 14 which is a subset of the first zone 13 and contains the midpoint of the first zone 13. That is to say, that the second zone 14 is entirely contained within the perimeter of the first zone 13, and is substantially centred thereupon, which utilises the central portions of the lenses and hence maximises image quality. To this end, the second microscope 11 comprises a second lens system 11a arranged to provide an optical magnification at least five times that of the first microscope 9, preferably at least 5 or 10 times that of the first microscope 9. Again, the focus of the second lens system 11a may be fixed or variable as in the case for the first microscope 9, and the second microscope 11 may also contain mirrors and/or prisms. Second zone 14 may, for instance, have a length and/or width below 2.5mm, or even below 1.5mm on the sample 7.

This second lens system 11a defines an optical axis 11b which is, in the construction illustrated, substantially orthogonal to the surface of the sample holder 5, and substantially intersects the optical axis 9b of the first microscope 9 at a common focal plane 10, i.e. a focal plane shared by both microscopes 9, 11. It is reiterated that the focal plane of the first microscope 9 is inclined to its optical axis 9b due to the inclination of the digital imaging device 9c to said optical axis 9b according to the Scheimpflug principle. However, it is not essential that the optical axes 9b, 11b intersect, since a degree of discrepancy is entirely acceptable and can be compensated digitally.

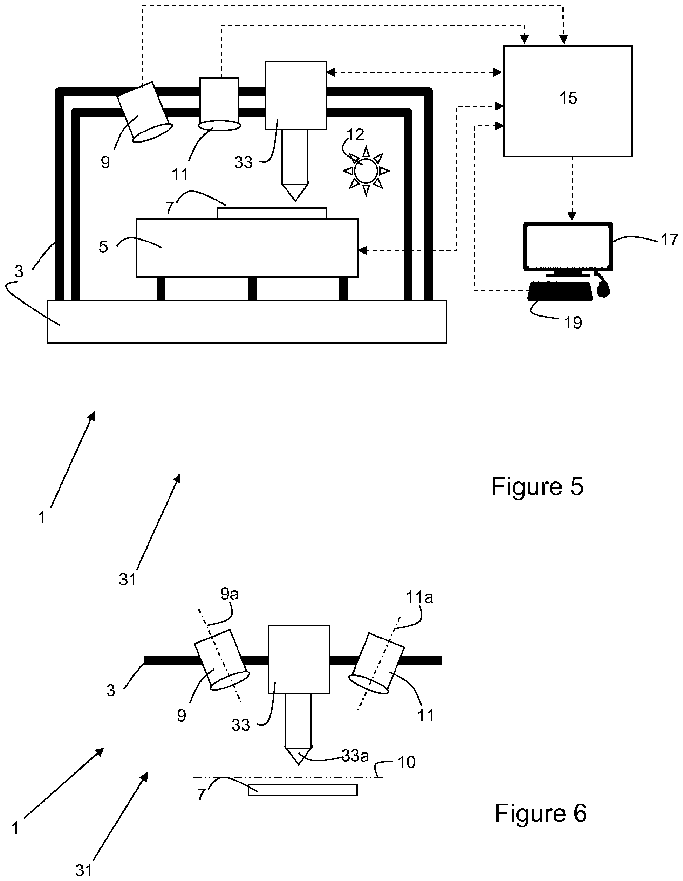

It should be noted that it is also possible to arrange each microscope 9, 11 at a non-zero angle to the normal of the sample holder 5, in which case each digital imaging device 9c, 11c is oriented according to the Scheimpflug principle, such a configuration being illustrated in figure 6, described below. Alternatively, the first microscope 9 can have its optical axis 9b orthogonal to the surface of the sample holder 5 with the second microscope 11 being at an angle to the normal of said surface. However, the illustrated configuration of figures 1 and 2 is optimal since it permits an uncorrected second image to be used at the highest magnification and zoom levels.

As mentioned above, the second zone 14 is substantially central to the first zone 13 since this latter contains the mid-point of the former, maximising the highest-quality image potential of each lens system 9a, 11a. Ideally, the mid-point of the first zone is within a circular or rectangular locus enclosing half of the area of the second zone.

The images received in real-time at an appropriate frame rate by each digital imaging device 9c, 11c are fed to an image processor 15, which may be implemented as a dedicated unit, or in software in a general-purpose computer interfaced with, and/or forming part of, the microscopy system. The first and second images may be constantly updated in real-time as the digital imaging devices 9c, 11c capture new images.

The image processor displays the processed images on a monitor 17, and an input device 19 such as a keyboard, mouse, trackball, or similar is used to control the image processor 15, in particular to command it to carry out a digital zoom of the images as will be described below, along with any other image corrections (such as colour, and geometric corrections of any images taken with a camera having optical axis inclined with respect to the normal of the sample holder surface as is the case for the first digital imaging device 9c in the illustrated construction).

Furthermore, if the focus of the microscopes 9, 11 is variable by means of focussing actuators, the image processor may command the adjustment of focus either based on commands input by the user by means of the input device 9, or automatically based on an autofocus algorithm.

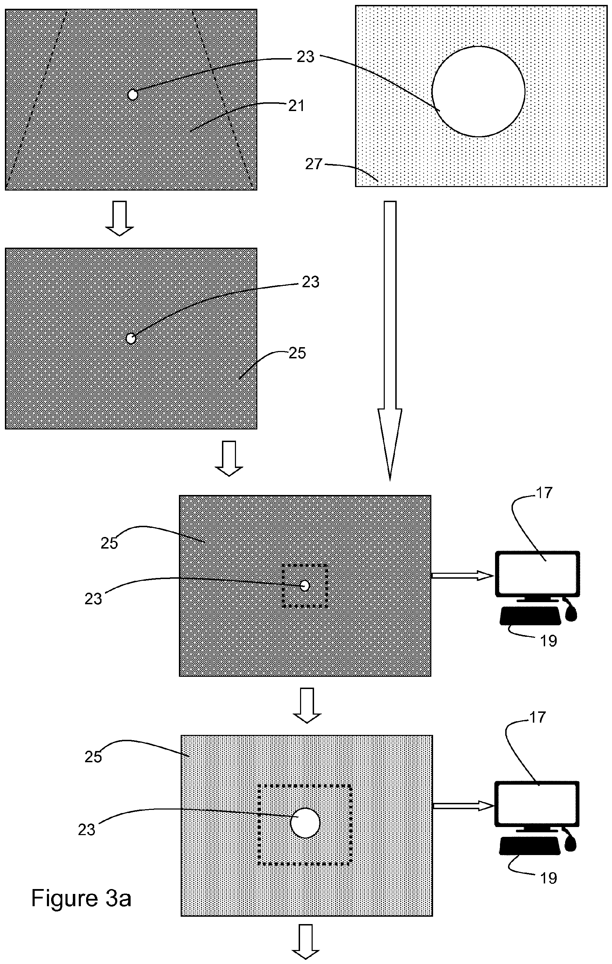

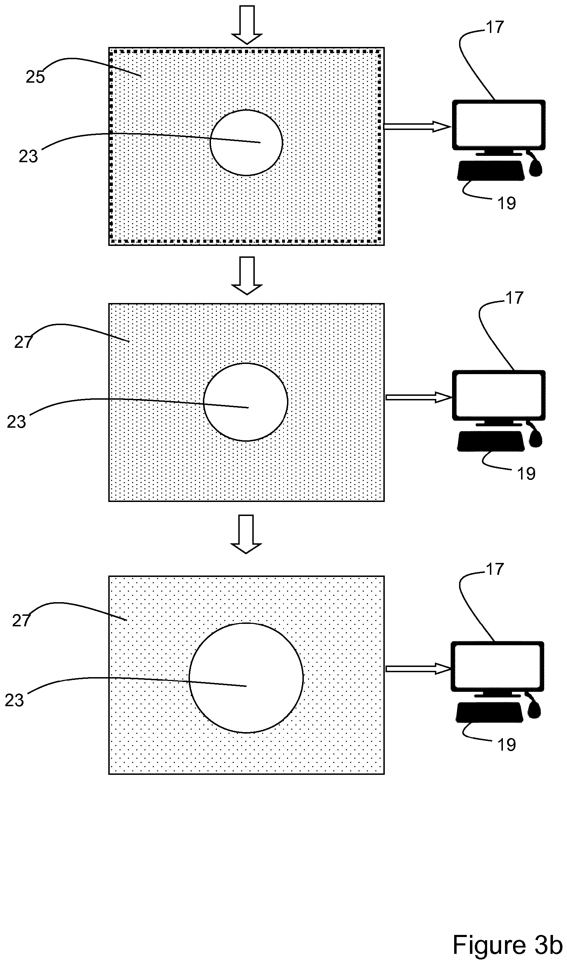

Figures 3a and 3b illustrate schematically the method applied by the image processor 15. In these figures, different densities of texture have been used to schematically indicate magnification / zoom levels.

At the top of figure 3, a first image 21 of a sample 7 with a feature of interest 23 is provided by the first microscope 9 at full size, showing the entirety of the first zone 13. For instance, if the first camera has a resolution of 16 megapixels (MP), the full image of the full field of view of the first camera 9 comprises all 16 megapixels.

Subsequently, the first image 21 is optionally corrected to eliminate the geometric (specifically trapezoidal, rotational or similar) distortion caused by the fact that the optical axis 9b of camera 9 is not perpendicular to the surface of the sample, this distortion being schematically represented by the dashed lines on the image 21. This correction results in a corrected first image 25 which replaces the original first image 21 initially obtained, and will simply be described as the "first image 25" in the foregoing. If this step is not carried out, "first image 25" should be read as "first image 21" in the following text.

Subsequently, the (corrected) first image 25 is synchronised with a second image 27 obtained from the second camera 11, this second image 27 being an image of the second zone 14 at higher magnification than that of the first zone 13. By "synchronisation", it is meant that the second image 27 with respect to the corrected first image is digitally aligned therewith, i.e. is digitally correctly positioned with respect to the first image 25. This is illustrated schematically by means of the dotted square, which indicates where the outer perimeter of the second image 27 is in respect to the first image 25. However, in this embodiment only the first image 25 is displayed to the user on the display device 17 at this stage. It is possible to display a line indicating the periphery of the second image 27 to the user, but this is not necessary.

In this view, the user is provided with the largest possible field of view, and he can move the sample holder 5 to position the feature of interest 23 in the centre of the displayed image if it is situated off to one side.

Subsequently, the user commands the image processor to zoom in.

This zoom is carried out exclusively digitally, i.e. in software, since the optical magnification of each of the cameras 9, 11 is fixed. This results in a "zoomed-in" subsection of the first image 25 being displayed to the user. However, this image is at lower resolution, since each pixel of the digital imaging device 9c subtends the same angle on the sample 7, but covers an ever-larger area on the display 17 as the zoom increases. This is illustrated in the lower part of figure 3a.

Once the first image 25 has been zoomed in, it is possible to displace the centre of the view in software if desired, otherwise the user may reposition the sample 7 by means of the sample holder 5 to ensure that the feature of interest 23 is situated in the centre of the view. It should be noted that any software translation of the first image 25 that would result in the second zone 14 disappearing from view is to be avoided. In such a case, when zooming after carrying out a software translation, the centre of the view should be displaced progressively towards the centre of the second zone 14 for reasons which will become apparent. Furthermore, in the case in which the sample holder 5 can be displaced by motorised actuators under the control of a computer, the user can select the feature of interest 23 in software, e.g. by selecting on its location as displayed on the display 17 by means of the input device 19, and the position of the sample holder 5 can be automatically adjusted in the x, y and optionally z directions to position the feature of interest 23 in the centre of the displayed view.

Passing now to the uppermost part of figure 3b, the user has zoomed in to the limit of acceptable resolution of the first image 25, the dotted line delimiting the extent of the second zone 14 almost filling the view. A further command to zoom in results in the view switching to the second image 27, displayed at full size, for instance 12 MP, 16 MP, or any other appropriate resolution. Since the second image 27 had previously been synchronised (i.e. collocated) with the corrected first image 21, this transition is substantially seamless since the centre of the image is not displaced. It is for this reason that if a software translation of the first image 25 has previously been carried out, that the view is centred on the second zone 14 at this point, otherwise the second image 27 would have to be cropped.

Subsequent digital zoom can then be carried out to zoom in further on the feature of interest 23 in the second image 27. Furthermore, digital translation of the zoomed-in second image 27 can be carried out if desired and if appropriate.

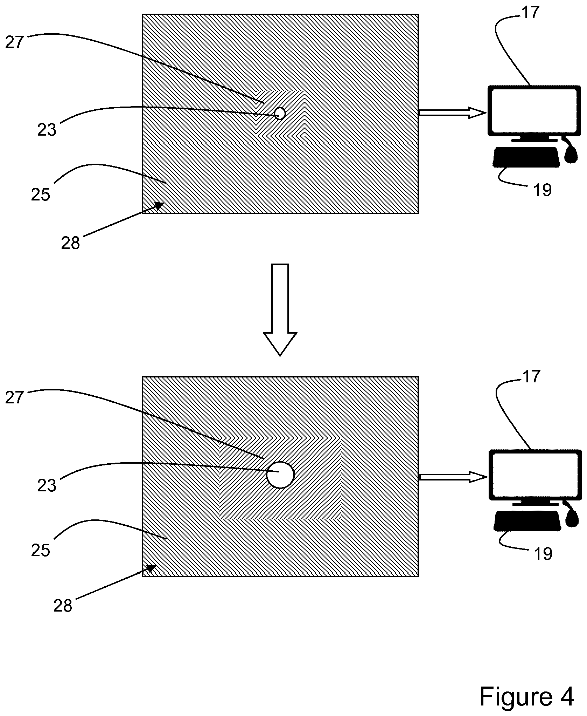

In an alternative variant illustrated in figure 4, the second image 27 can, after synchronisation, be superimposed on the first image 25 (such that the second image 27 replaces the corresponding zone of the first image 25), and this combined, composite image 28 can then be digitally zoomed throughout the entire zoom range. This is illustrated schematically in figure 4 by means of hatched lines in different directions, \\ lines indicating areas provided by the first image 25 and // lines indicating the areas provided by the second image 27. To this effect, the upper part of figure 4 illustrates the first image 25 at full resolution, and the lower part of figure 4 illustrates a partially-zoomed image similar to that illustrated at the bottom of figure 3a. However, the junction between the two images 25, 27 may be perceptible, particularly if lighting conditions are such that the colour cast on each image is different. To this effect, the upper part of figure 4 illustrates the first image 25 at full resolution, and the lower part of figure 4 illustrates a partially-zoomed image similar to that illustrated at the bottom of figure 3a.

In any case, it should be noted that the initial calibration of the two microscopes 9, 11 and the synchronisation of the images emanating therefrom can be factory-set, and any minor optical misalignment between the microscopes 9, 11 can be corrected digitally by the image processor 15 by a skilled technician or by an automatic algorithm such that the images are correctly synchronised with each other. This can be carried out e.g. by imaging a calibration pattern at a suitable position with respect to the microscopes 9, 11, at a suitable magnification (e.g. the highest magnification of the microscopes 9, 11 if this is variable) and correlation of the images used to correctly align the images by either adjusting the physical orientation of the microscopes 9, 11 or their lens systems 9a, 11a, by adjusting the position of one image with respect to the other in software, or both.

Although the microscopy system 1 according to the invention can be used as a standalone unit as such, it can also be advantageously combined with other systems, such as a materials testing device 31 as illustrated in figure 5. This materials testing device may for instance be an indenter, scratch tester, tribological tester or similar, and as such may comprise a materials testing module 33 mounted to the support 3. The entire system 31 is arranged in such a manner that the sample holder 5 can present the sample 7 not only to the microscopes 9, 11, but also to the materials testing module 33. This enables microscopy of the sample 7 to be carried out before and/or after carrying out a materials test without having to handle the sample 7.

Furthermore, the same computer carrying out the role of image processor 15 may also serve to command the materials testing module 33, the actuators of the sample holder 5, and receive measurement data from sensors provided in, or associated with, the sample holder 5 and the materials testing module 33.

Figure 6 illustrates partially an alternative configuration of a materials testing device 31 according to the invention. In this case, each microscope 9, 11 is provided such that it can image the portion of the sample 7 contacted by the materials testing tip 33a of the materials testing module 33. As a result, the sample 7 does not need to be translated in the xy plane (see figure 1 for the definitions of the axes) to be viewed after e.g. a scratch test or indentation test has been carried out. To this end, each microscope 9, 11 has its optical axis inclined to the normal of the surface of the sample 7, and after indentation the tip 33a can be withdrawn to enable an unobstructed view of the zone of interest of the sample 7 surface. Alternatively, the focal plane 10 of the microscopes 9, 11 could be situated in a plane further away from the microscopes 9, 11 than the lowest extension of the tip 33a (as illustrated), such that the sample 7 can be brought into focus by translating it in the z direction away from the tip 33a. In other words, the tip 33a may situated closer to a plane intersecting the outermost lens of each of said microscopes 9, 11 than it is to said common focal plane 10.

Naturally, in the configuration of figure 6, the Scheimpflug principle can be applied in respect of the orientation of the digital imaging devices 9c, 11c contained in each microscope 9, 11.

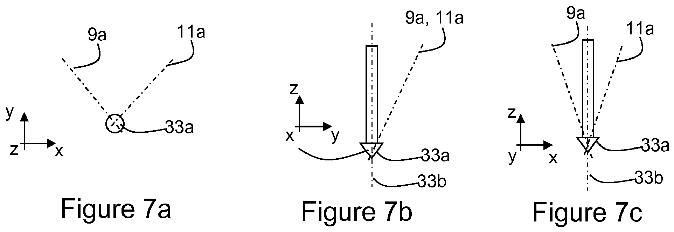

It should be noted that both optical axes 9a, 11a plus the axis of the tip 33a can all be in the same plane, but it is also possible to e.g. arrange the optical axis 9a, 11a in one oblique plane which makes an acute or oblique angle with the axis 33b of the tip 33a (as illustrated schematically as projections in the planes xy, yz and xz as shown in figures 7a, 7b and 7c respectively), or to arrange both optical axes 9a, 11a at different angles to the axis 33b of the tip 33a.

The methods according to the invention as defined above may be carried out under the control of a computer program product comprising instructions which, when executed by a computer implementing said image processor 15, cause the computer to carry out the method steps as described above. This computer program product may be provided on a non-transient computer-readable storage medium such as a CD-ROM, memory stick, hard drive, or any other convenient data carrier.

Although the invention has been described in terms of specific embodiments, variations thereto are possible without departing from the scope of the invention as defined in the appended claims.

## Claims

1. Microscopy system (1) comprising:
- a sample holder (5) adapted to support a sample (7) on a surface thereof, said surface defining a plane;
- a first optical microscope (9) facing said sample holder (7) and comprising a first lens system (9a) having a first optical magnification, and a first digital imaging device (9c) arranged to record images through said first lens system (9a), said images being of a predetermined first zone (13) of a sample (7) positioned on said sample holder (5);
- a second optical microscope (11) facing said sample holder (5) and comprising a second lens system (11a) having a second optical magnification at least five times greater than said first optical magnification, and a second digital imaging device (11c) arranged to record images through said second lens system (11a), said images being of a second zone (14) which is a subset of said first zone (13) containing the midpoint of said first zone;
- a display (17) arranged to display said images to a user; and
- an image processor (15) adapted to carry out a digital zoom, said image processor (15) being arranged to receive a first image (21, 25) from said first digital imaging device (9c) and a second image (27) from said second digital imaging device (11c) and to synchronise said images (21, 25, 27) spatially such that said second image (27) is spatially-aligned with said first image (21, 25), said first image (21), said second image (27), or a combination of said images (21, 25, 27) being displayed in function of a desired digital zoom level,
wherein at least one of said optical microscopes (9, 11) has an optical axis arranged at an angle to the normal to said plane.

2. Microscopy system (1) according to claim 1, wherein said second lens system (11a) has an optical axis (11b) substantially orthogonal to the surface of said sample holder (5).

3. Microscopy system (1) according to any of the preceding claims, wherein said first lens system (9a) has an optical axis (9b) arranged at an angle (α) with respect to the normal to the surface of said sample holder (5).

4. Microscopy system (1) according to any of the preceding claims, wherein said first digital imaging device (9c) is arranged such that said first digital imaging device (9c) lies parallel to the image plane of the surface of the sample holder (5) as projected through said first lens system (9a).

5. Microscopy system (1) according to any of the preceding claims, wherein said image processor (15) is arranged such that:
- below a predetermined digital zoom level, at least a part of said first image (21, 25) is displayed on the display (17) and said second image (27) is not displayed; and
- above a predetermined digital zoom level, at least a part of said second image (27) is displayed on the display, and said first image (21, 25) is not displayed.

6. Microscopy system (1) according to one of claims 1-4, wherein said image processor (15) is arranged so as to generate a composite image (28) comprising said second image (27) superimposed on said first image (21, 25).

7. Microscopy system according to one of claims 1-6, wherein said image processor (15) is arranged so as to carry out a geometric correction on any of said images (21, 27) obtained from a microscope having an optical axis (9b, 11b) which is not orthogonal to the plane of the surface of said sample holder (5).

8. Materials testing device (31) comprising a microscope system (1) according to any of claims 1-7.

9. Materials testing device (31) according to claim 8, further comprising a materials testing tip (33a) such as an indenter, wherein said first lens system (9a) and said second lens system (11a) have a substantially common focal plane (10), wherein said materials testing tip (33a) is configured such that a distal extremity of said tip can be situated at said common focal plane (10).

10. Materials testing device (31) according to claim 8, further comprising an indenter (33a), wherein said first lens system (9a) and said second lens system (11a) have a substantially common focal plane (10), wherein said common focal plane is situated beyond the distal tip of said indenter (33a).

11. Method of operating a microscopy system (1) according to any of claims 1-8, comprising the steps of:
- imaging a sample (7) provided on said sample holder (5) by means of said first optical microscope (9) and said second optical microscope (11);
- providing a first image (21, 25) obtained from said first optical microscope (9) and a second image (27) obtained from said second optical microscope (11) to said image processor (15);
- synchronising said first and second images (21, 25, 27) spatially such that said second image (27) is correctly spatially-aligned with said first image (21, 25);
- displaying on said display (17) said first image (21, 15), said second image (27), or a combination of said images (21, 25, 27, 28) in function of a desired digital zoom level.

12. Method according to claim 11, wherein:
- below a predetermined digital zoom level, at least a part of said first image (21, 25) is displayed on the display (17) and said second image (27) is not displayed; and
- above a predetermined digital zoom level, at least a part of said second image (27) is displayed on the display, and said first image (21, 25) is not displayed.

13. Method according to claim 11, wherein a composite image (28) is generated, said composite image (28) comprising said second image (27) superimposed on said first image (21, 25).

14. Method according to one of claims 11-13, wherein said sample holder (5) is displaceable under motorised actuator control, and wherein said method comprises the steps of:
- user-selection of a feature of interest (23) on said display (17) by means of an input device (19);
- automatically commanding said actuators to position said sample holder (5) such that said feature of interest (23) is substantially centred on said display (17).

15. Computer program product comprising instructions which, when the program is executed by a computer acting as said image processor (15), causes said computer to carry out the method of one of claims 11-14.
